## Europäisches Patentamt

## European Patent Office

## Office européen des brevets

(11) Veröffentlichungsnummer: **0 380 179**
**A1**

## EUROPÄISCHE PATENTANMELDUNG

(21) Anmeldenummer: **90200159.3**

(22) Anmeldetag: **22.01.90**

(51) Int. Cl.⁵: **G02B 6/32, G02B 6/38, G02B 6/42**

(30) Priorität: **26.01.89 DE 3902264**

(43) Veröffentlichungstag der Anmeldung:
**01.08.90 Patentblatt 90/31**

(84) Benannte Vertragsstaaten:
**DE FR GB IT SE**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT SE**

(72) Erfinder: **Wollenweber, Heinz**
**Jakobusstrasse 10**
**D-5176 Vettweiss 7(DE)**
Erfinder: **Lohmüller, Detlev**
**Rilkestrasse 90**
**D-5300 Bonn 3(DE)**
Erfinder: **Mihm, Achim**
**Graf-Adolf-Strasse 54**
**D-5000 Köln 80(DE)**
Erfinder: **Eutin, Wolfgang**
**Glücksburgerstrasse 7**
**D-5000 Köln 80(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Verfahren und Vorrichtung zur Ausrichtung eines LWL zur Linse eines Steckverbinders.**

(57) Die Erfindung betrifft ein Verfahren zur Ausrichtung eines LWL (4) zur Linse (2) eines Steckverbinders, bei welchem der LWL (4) in eine derartige Lage gebracht wird, daß ein aus dem LWL (4) über die Linse (2) geführter Lichtstrahl konzentrisch auf eine Vierquadrantenmeßsonde (8) gerichtet ist. Ein besonders einfaches Verfahren ergibt sich dadurch, daß der Vierquadrantenmeßsonde (8) eine Fokuslinse (10) im Abstand ihrer Brennweite zugeordnet ist, und daß der axiale Abstand der Stirnfläche des LWL (4) von der Linse (2) des Steckverbinders derart eingestellt wird, daß die Summe der von den vier Elementen (9) der Vierquadrantenmeßsonde (8) gemessenen Lichtintensitäten einen minimalen Wert aufweist.

FIG.1

## Verfahren und Vorrichtung zur Ausrichtung eines LWL zur Linse eines Steckverbinders

Die Erfindung bezieht sich auf ein Verfahren zur Ausrichtung eines LWL zur Linse eines Steckverbinders, bei welchem der LWL in eine derartige Lage gebracht wird, daß ein aus dem LWL über die Linse geführter Lichtstrahl konzentrisch auf eine Vierquadrantenmeßsonde gerichtet ist.

Beim in der GB-A 2 082 342 beschriebenen derartigen Verfahren wird der von der Linse eines Steckers ausgehende Strahl aufgeteilt. Ein Teilstrahl wird auf eine Vierquadrantendiode gerichtet. Der zweite Teilstrahl wird über eine fokussierende Linse auf eine Videokamera geleitet. Die Ausgangssignale der Vierquadrantendiode werden zur ausrichtenden Positionierung eines LWL in zur Achsrichtung senkrechten Koordinaten verwendet. Die Ausrichtung in Achsrichtung erfolgt in Abhängigkeit des von der Videokamera angezeigten Lichtflecks des zweiten Teilstrahls.

Der Erfindung liegt die Aufgabe zugrunde, das Verfahren der eingangs genannten Art zu vereinfachen.

Die Lösung gelingt dadurch, daß der Vierquadrantenmeßsonde eine Fokuslinse im Abstand ihrer Brennweite zugeordnet ist, und daß der axiale Abstand der Stirnfläche des LWL von der Linse des Steckverbinders derart eingestellt wird, daß die Summe der von den vier Elementen der Vierquadrantenmeßsonde gemessenen Lichtintensitäten einen minimalen Wert aufweist.

Da die lichtempfindlichen Flächen der vier Einzelelemente einer Vierquadrantenmeßsonde einen zentralen Bereich nicht überdecken, ist das Summensignal der Einzelelemente dann am kleinsten, wenn der auf die Vierquadrantenmeßsonde auffallende Lichtfleck am kleinsten ist, wenn also der Fokuspunkt eingestellt ist. Wegen dieser Wirkung kann die Vierquadrantenmeßsonde erfindungsgemäß zur axialen Ausrichtung des LWL genutzt werden. Man erhält ein Summensignal, welches direkt zur Ansteuerung eines Manipulators geeignet ist, so daß der axiale LWL-Abstand automatisch einjustiert werden kann. Dementsprechend ist eine bevorzugte Weiterbildung des erfindungsgemäßen Verfahrens dadurch gekennzeichnet, daß der Abstand zwischen der Linse des Steckverbinders und der Stirnfläche des LWL mittels eines Manipulators eingestellt wird, welcher von der Summe der von den Einzelelementen einer Vierquadrantenmeßsonde gebildeten Signale derart gesteuert wird, daß das Summensignal einen Minimalwert erreicht.

Eine Vorrichtung zur Ausübung des erfindungsgemäßen Verfahrens zur Ausrichtung eines LWL zur Linse eines Steckverbinders mit Mitteln zur Verschiebung des LWL relativ zur Linse und mit einer Vierquadrantenmeßsonde, auf welche der vom LWL ausgehende Strahl gerichtet ist, ist dadurch gekennzeichnet, daß die Vierquadrantenmeßsonde im Fokuspunkt einer Fokuslinse angeordnet ist, daß die Ausgangssignale der Vierquadrantenmeßsonde einer Summierschaltung zugeführt sind, welche ein Summensignal aus den Einzelsignalen der Vierquadrantenelemente bildet.

Die automatische Positionierung eines LWL in Achsrichtung wird dadurch ermöglicht, daß das Summensignal einer Steuerschaltung eines den LWL aufnehmenden und in Achsrichtung des LWL verschiebenden Manipulators zugeführt ist.

Als Vierquadrantenmeßsonde ist vorteilhaft eine Vierquadrantendiode geeignet, wie sie auch im Falle der GB-A 2 082 342 verwendet wird.

Wenn die Fokuslinse mit der Vierquadrantenmeßsonde räumlich verbunden ist, kann sie genau und unverrückbar im Abstand der Brennweite zur Vierquadrantenmeßsonde fixiert sein. Ein kleinster Lichtfleck erscheint dann auf der Fläche der Vierquadrantenmeßsonde, wenn der die Linse des Steckverbinders verlassende Lichtstrahl in angestebter Weise parallel verläuft, wenn sich also im Sinne der geometrischen Optik ein paralleles Strahlenbündel einstellt.

Die Erfindung wird anhand der Zeichnung näher erläutert.

Fig. 1 zeigt perspektivisch ein Steckerelement mit einer angelegten erfindungsgemäß gestalteten Vierquadrantendiode.

Fig. 2 zeigt eine Steuerschaltung zur erfindungsgemäßen Ansteuerung eines Manipulators durch die Ausgangssignale einer Vierquadrantendiode.

Im Steckergehäuse 1 ist eine Kugellinse 2 angeordnet. Der in einem Steckerstift 3 unlösbar eingebettete LWL 4 muß derart relativ zur Kugellinse 2 ausgerichtet werden, daß ein von der Kugellinse 2 aufgeweiteter Ausgangsstrahl des LWL 4 koaxial und parallel zur Steckerachse verläuft. Beim Ausführungsbeispiel wird die Koaxialität durch Kippen des Steckerstiftes 3 in den Koordinatenrichtungen x und y einjustiert. Dabei bildet die gelenkig am Steckergehäuse 1 gelagerte Gelenkkugel 5 den Drehpunkt.

Durch axiale Verschiebung des Steckerstiftes 3 in der Gelenkkugel 5 wird die Parallelität des die Kugellinse 2 verlassenden Strahls einjustiert. Dieser Strahl wird auf einen Sensor 6 gerichtet, dessen Gehäuse 7 in koaxial ausgerichteter Lage auf das Steckerghäuse 1 aufgesetzt ist. Im Endbereich des Gehäuses 7 ist eine Vierquadrantendiode 8 zentrisch angeordnet, deren Stirnfläche in vier Quadranten jeweils Photodioden 9 trägt. Vor den lichtempfindlichen Flächen der Photodioden 9 ist im Abstand der Brennweite eine Sensor-Kugellinse 10 am Gehäuse 7 befestigt.

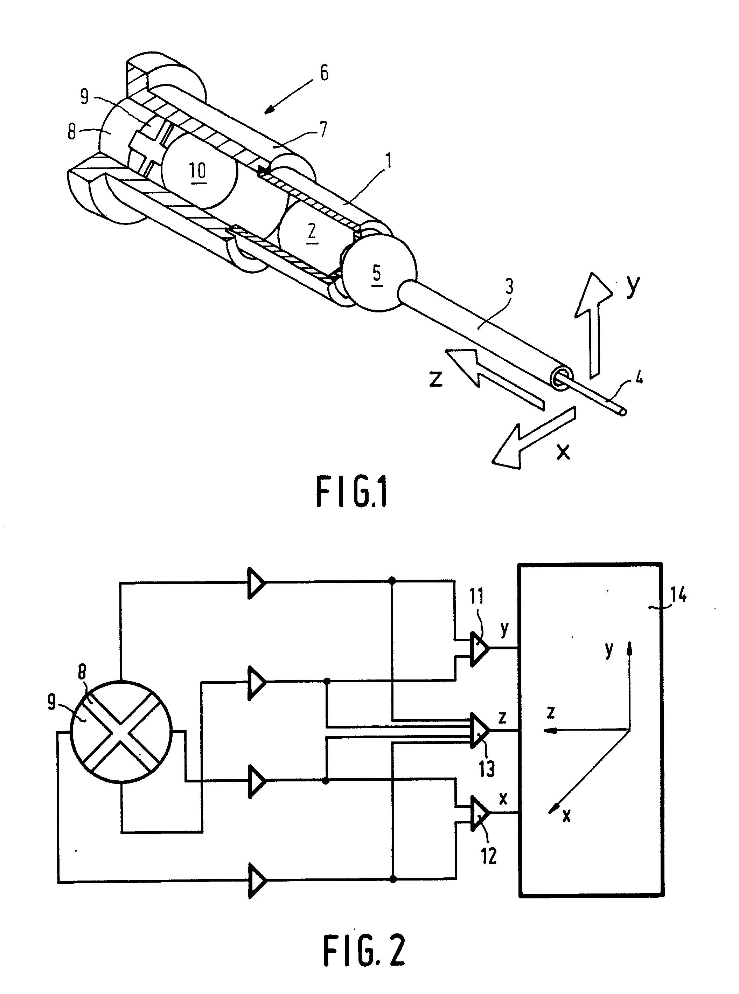

Das erfindungsgemäße Verfahren zur Lagejustierung des LWL 4 wird anhand Fig. 2 erläutert. Die vorverstärkten Ausgangssignale von paarweise gegenüberliegenden Photodioden 9 der Vierquadrantendiode 8 werden über Differenzverstärker 11 und 12 voneinander subtrahiert, so daß an den Ausgängen der Differenzverstärker 11 und 12 entsprechende Differenzsignale verfügbar sind, welche in bekannter Weise (vgl. GB-A 2 082 342) ein Maß für die Abweichung der Strahlmitte von der Mitte der Vierquadrantendiode in den Koordinatenrichtungen x und y bilden.

Erfindungsgemäß wird im Summierverstärker 13 zusätzlich die Summe der Einzelsignale sämtlicher Photodioden 9 gebildet. Das Ausgangssignal des Summierverstärkers 13 bildet ein Kriterium für die Lage des LWL 4 in z-Richtung.

Die Ausgangssignale der Differenzverstärker 11 und 12 sowie des Summierverstärkers 13 sind der Steuerschaltung eines Manipulators 14 zugeführt, welcher den Steckerstift in den Koordinatenrichtungen x, y und z (vgl. Fig. 1) zu verschieben vermag. Die optimale Einstellung des LWL 4 ist dann erreicht, wenn sämtliche Ausgangssignale der Differenzverstärker 11 und 12 sowie des Summierverstärkers 13 einen Minimalwert aufweisen. Vorzugsweise werden zunächst die Optimalwerte in den Koordinatenrichtungen x und y vom Manipulator 14 angefahren, danach wird der Minimalwert des Ausgangssignals des Summierverstärkers 13 angestrebt.

Erfindungsgemäß genügt eine einzige Vierquadrantendiode 9 als Lagesensor für den LWL 4, um die optimale Position in allen drei Koordinatenrichtungen einjustieren zu können.


**Ansprüche**

1. Verfahren zur Ausrichtung eines LWL (4) zur Linse (2) eines Steckverbinders, bei welchem der LWL (4) in eine derartige Lage gebracht wird, daß ein aus dem LWL (4) über die Linse (2) geführter Lichtstrahl konzentrisch auf eine Vierquadrantenmeßsonde (8) gerichtet ist, dadurch gekennzeichnet, daß der Vierquadrantenmeßsonde (8) eine Fokuslinse (10) im Abstand ihrer Brennweite zugeordnet ist, und daß der axiale Abstand der Stirnfläche des LWL (4) von der Linse (2) des Steckverbinders derart eingestellt wird, daß die Summe der von den vier Elementen (9) der Vierquadrantenmeßsonde (8) gemessenen Lichtintensitäten einen minimalen Wert aufweist.

2. Verfahren nach Anspruch 1, dadurch gekennzeichnet, daß der Abstand zwischen der Linse (2) des Steckverbinders und der Stirnfläche des LWL (4) mittels eines Manipulators (14) eingestellt wird, welcher von der Summe der von den Einzelelementen einer Vierquadrantenmeßsonde (8) gebildeten Signale derart gesteuert wird, daß das Summensignal einen Minimalwert erreicht.

3. Vorrichtung zur Ausrichtung eines LWL (4) zur Linse (2) eines Steckverbinders mit Mitteln zur Verschiebung des LWL (4) relativ zur Linse (2) und mit einer Vierquadrantenmeßsonde (8), auf welche der vom LWL (4) ausgehende Strahl gerichtet ist, dadurch gekennzeichnet, daß die Vierquadrantenmeßsonde (8) im Fokuspunkt einer Fokuslinse (10) angeordnet ist, daß die Ausgangssignale der Vierquadrantenmeßsonde (8) einer Summierschaltung zugeführt sind, welche ein Summensignal aus den Einzelsignalen der Vierquadrantenelemente (9) bildet.

4. Vorrichtung nach Anspruch 3, dadurch gekennzeichnet, daß das Summensignal einer Steuerschaltung eines den LWL (4) aufnehmenden und in Achsrichtung des LWL (4) verschiebenden Manipulators (12) zugeführt ist.

5. Vorrichtung nach Anspruch 3 oder 4, dadurch gekennzeichnet, daß die Vierquadrantenmeßsonde eine Vierquadrantendiode (8) ist.

6. Vorrichtung nach einem der Ansprüche 3 bis 5, dadurch gekennzeichnet, daß die Fokuslinse 10 mit der Vierquadrantenmeßsonde (8) räumlich verbunden ist.

7. Vorrichtung nach einem der Ansprüche 3 bis 6, dadurch gekennzeichnet, daß die Ausgangssignale gegenüberliegender Vierquadrantenelemente (9) einer Vierquadrantenmeßsonde (8) Differenzverstärkern (11,12) zugeführt sind, deren Ausgangssignale einer Steuerschaltung eines den LWL (4) aufnehmenden Manipulators (12) zur Justierung des LWL (4) in zur Achsrichtung senkrechten Koordinaten (x,y) zugeführt sind.

FIG.1

FIG. 2

Europäisches
Patentamt

# EUROPÄISCHER RECHERCHENBERICHT

Nummer der Anmeldung

EP 90 20 0159

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 082 342 (STANDARD TELEPHONES AND CABLES)<br>* Zusammenfassung; Abbildung *<br>--- | 1-5 | G 02 B 6/32<br>G 02 B 6/38<br>G 02 B 6/42 |
| Y | US-A-3 938 895 (BRIDGER et al.)<br>* Spalte 3, Zeile 56 - Spalte 4, Zeile 19; Abbildungen 2,3 *<br>--- | 1-5 | |
| A | EP-A-0 238 977 (SIEMENS AG)<br>* Spalte 4, Zeilen 40-55; Anspruch 1; Abbildung 1 *<br>--- | 1,3,6 | |
| A | EP-A-0 207 552 (N.V. PHILIPS GLOEILAMPENFABRIEKEN)<br>* Seite 5, Zeile 19 - Seite 6, Zeile 38; Abbildungen 2,3 *<br>--- | 1,3,7 | |
| A | EP-A-0 094 274 (THOMSON-CSF)<br>* Seite 3, Zeilen 7-31; Abbildungen 1-6 *<br>----- | 1-5,7 | |

**RECHERCHIERTE SACHGEBIETE (Int. Cl.5)**

G 02 B 6/00
G 02 B 7/00

Der vorliegende Recherchenbericht wurde für alle Patentansprüche erstellt

| Recherchenort | Abschlußdatum der Recherche | Prüfer |
|---|---|---|
| BERLIN | 06-04-1990 | VON MOERS F |

EPO FORM 1503 03.82 (P0403)